# EUROPÄISCHE PATENTANMELDUNG

(11) **EP 4 764 276 A1**
(43) Veröffentlichungstag der Anmeldung: **24.06.2026**
(21) Anmeldenummer: 24220467.5
(22) Anmeldetag: 17.12.2024
(51) Int. Cl.: F16L 3/223, E02D 17/13, E02F 3/20

(54) **LEITUNGSKLEMME ZUM BILDEN EINES LEITUNGSBÜNDELS, LEITUNGS- BÜNDEL UND BAUMASCHINE**

(71) Anmelder: BAUER Maschinen GmbH, 86529 Schrobenhausen (DE)
(72) Erfinder: Finkenzeller, Stefan, 85084 Reichertshofen (DE); Peyerl, Andreas, 86558 Hohenwart (DE); Schmid, Heiner, 86551 Aichach (DE)
(74) Vertreter: Wunderlich & Heim Patentanwälte PartG mbB

(57) **Zusammenfassung**

Leitungsklemme zum Bilden eines Leitungsbündels, für eine Baumaschine, wobei mehrere Schlauchleitungen im Leitungsbündel in mindestens zwei Ebenen angeordnet sind. Die Leitungsklemme weist auf:
mindestens einen Klemmenmittenkörper, welcher auf einer ersten und einer zweiten Seite erste Ausnehmungen aufweist, welche jeweils angepasst an einen Teilumfangsabschnitt einer aufzunehmenden Leitung ausgebildet sind,
mindestens zwei Klemmenaußenkörper, welche jeweils eine nach außen gerichtete Außenumfangsseite und eine nach innen gerichtete Anlageseite aufweisen, welche dem Klemmenmittenkörper zugewandt ist, wobei an der Anlageseite mindestens eine zweite Ausnehmung gebildet ist, welche angepasst an einen Teilumfangsabschnitt der aufzunehmenden Leitung ausgebildet und einer ersten Ausnehmung in dem Klemmenmittenkörper zum Bilden eines Durchganges für eine Leitung zugeordnet ist,
wobei die mindestens zwei Klemmenaußenkörper gegen den mindestens einen Klemmenmittenkörper mittels mindestens einer Spanneinrichtung spannbar und daran festlegbar sind, wobei die Leitungen in den gebildeten Durchgängen aufgenommen und darin kraftschlüssig festgelegt sind.

## Beschreibung

Die Erfindung betrifft eine Leitungsklemme zum Bilden eines Leitungsbündels, insbesondere für eine Baumaschine, welches mehrere Leitungen, insbesondere ein oder mehrere Schlauchleitungen, umfasst, gemäß dem Anspruch 1.

Die Erfindung betrifft weiter ein Leitungsbündel, insbesondere für eine Baumaschine, welches mehrere Leitungen, insbesondere ein oder mehrere Schlauchleitungen, umfasst, welche in dem Leitungsbündel in mindestens zwei Ebenen angeordnet sind, gemäß dem Oberbegriff des Anspruchs 9.

Die Erfindung betrifft schließlich eine Baumaschine mit einem Trägergerät, einem daran angeordneten Mast oder Ausleger, einem am Mast beziehungsweise dem Ausleger verstellbar gehaltenen Bauarbeitsgerät und mindestens einem Leitungsbündel, welches entlang des Mastes oder Auslegers von dem Trägergerät zu dem Bauarbeitsgerät, insbesondere über mindestens eine Umlenkrolle, geführt ist, gemäß dem Oberbegriff des Anspruchs 12.

Bei bestimmten Baumaschinen, etwa Schlitzwandfräsvorrichtungen zum Erstellen einer Schlitzwand im Boden, wie sie beispielsweise aus der EP 4 455 407 bekannt sind, besteht die Notwendigkeit, eine Vielzahl von Leitungen einer Bearbeitungsvorrichtung, wie etwa einer Schlitzwandfräse, entlang eines Bearbeitungsweges nachzuführen. Die Schlauchleitungen können etwa zum Zuführen oder Abführen von Hydraulikflüssigkeit, von Kühlflüssigkeiten sowie zum Zuführen von Stütz- oder Zementsuspensionen oder zum Abführen von abgetragenem Bodenmaterial ausgebildet sein. Diese Schlauchleitungen sowie andere Leitungen, etwa Elektrokakel, können häufig, wie es beispielsweise aus der EP 4 455 407 A1 hervorgeht, in der Art einer Schleppleitung mit oder ohne Umlenkrolle entlang eines Mastes angeordnet sein.

Insbesondere bei mehreren nachzuführenden Leitungen ist es sinnvoll und üblich, diese zu einem Leitungsbündel zusammenzufassen. Dies wird in der Regel dadurch erreicht, dass die Leitungen in bestimmten Abständen von einigen Metern mit einem Spann- oder Umfassungsgurt oder einem Band umspannt werden, so dass die einzelnen Leitungen zu einem strangartigen Leitungsbündel zusammengehalten werden.

In der Praxis zeigen sich bei dieser Vorgehensweise zum Bilden eines Leitungsbündels jedoch immer wieder Nachteile. Zum einen sind derartige Bänder oder Gurte, die üblicherweise aus einem Textilmaterial bestehen, im Baubetrieb einem erheblichen Verschleiß ausgesetzt. Es kann zu einem Lockern oder sogar zu einem vollständigen Lösen der einzelnen Gurte kommen, so dass dann die Leitungen in diesen Leitungsabschnitten nicht mehr zu einem kompakten strangartigen Leitungsbündel zusammengefasst sind. Dies beeinträchtigt das Nachführen des Leitungsbündels und birgt die Gefahr von Beschädigungen einzelner Leitungen, etwa beim Eintritt der Leitungen in einen Schlitz im Boden, insbesondere bei einem Kontakt mit feststehenden Leit- oder Führungswänden am Rand eines Schlitzes.

Derartige Bänder zum Zusammenfassen und Zusammenspannen von Leitungen zu einem Leitungsbündel müssen daher oft während eines Baubetriebes gewartet und insbesondere ersetzt werden. Dies ist arbeits- und zeitaufwändig, anstrengend für das Bedienpersonal und kann zu erheblichen Stillstandzeiten der kostenintensiven Baumaschine führen.

Der Erfindung liegt die **Aufgabe** zugrunde, das Bilden eines Leitungsbündels mit mehreren Leitungen besonders einfach und zuverlässig zu gestalten und auch ein Leitungsbündel und eine Baumaschine hierzu anzugeben.

Die Aufgabe wird nach der Erfindung mit einer Leitungsklemme mit den Merkmalen des Anspruchs 1, ein Leitungsbündel mit den Merkmalen des Anspruchs 9 und eine Baumaschine mit den Merkmalen des Anspruchs 12 gelöst. Bevorzugte Ausführungen der Erfindung sind in den jeweils abhängigen Ansprüchen angegeben.

Gemäß der Erfindung ist eine Leitungsklemme zum Bilden eines Leitungsbündels, insbesondere für eine Baumaschine, vorgesehen, welches mehrere Leitungen, insbesondere ein oder mehrere Schlauchleitungen, umfasst, welche in dem Leitungsbündel in mindestens zwei Ebenen angeordnet sind, wobei die Leitungsklemme aufweist:
- mindestens einen Klemmenmittenkörper, welcher auf einer ersten Seite und einer zweiten Seite erste Ausnehmungen aufweist, welche jeweils angepasst an einen Teilumfangsabschnitt, insbesondere einem etwa halben Umfangsabschnitt, einer aufzunehmenden Leitung ausgebildet sind,
- mindestens zwei Klemmenaußenkörper, welche jeweils eine nach außen gerichtete Außenumfangsseite und eine nach innen gerichtete Anlageseite aufweisen, welche dem Klemmenmittenkörper zugewandt ist, wobei an der Anlageseite mindestens eine zweite Ausnehmung gebildet ist, welche angepasst an einen Teilumfangsabschnitt, insbesondere einem etwa halben Umfangsabschnitt, der aufzunehmenden Leitung ausgebildet und einer ersten Ausnehmung in dem Klemmenmittenkörper zum Bilden eines Durchganges für eine Leitung zugeordnet ist,
- wobei die mindestens zwei Klemmenaußenkörper gegen den mindestens einen Klemmenmittenkörper mittels mindestens einer Spanneinrichtung spannbar und daran festlegbar sind, wobei die Leitungen in den gebildeten Durchgängen aufgenommen und darin kraftschlüssig festgelegt sind.

Die vorliegende Erfindung beruht auf der Erkenntnis, dass ein auftretender Verschleiß an Spannbändern oder Gurten zum Bilden eines Leitungsbündels maßgeblich darauf zurückzuführen ist, dass es in einem Baubetrieb zwischen den einzelnen Leitungen zu einer Relativverschiebung in Schlauchlängsrichtung kommen kann. Hierdurch werden die das Schlauchbündel abstandsweise umfassenden Spannbänder einer erheblichen Scherbeanspruchung ausgesetzt, welche die Spannbänder lockern und sogar zerstören kann.

Zudem können innerhalb des Leitungsbündels verbleibende axiale Verschiebungen zwischen einzelnen Leitungen entstehen, durch welche das Leitungsbündel schwerer handhabbar ist, was einen zuverlässigen Baubetrieb beeinträchtigt. Insbesondere beim Nachführen von Leitungen zu einer Schlitzwandfräse ist es erwünscht, ein Leitungsbündel möglichst spannungsfrei oder querkraftfrei nachzuführen, um so zusätzliche Ablenkkräfte auf die Schlitzwandfräse im Betrieb zu vermeiden. Derartige Ablenkkräfte können dazu führen, dass es zu einer unerwünschten Abweichung der Ist-Ausrichtung der Schlitzwandfräse gegenüber einer gewünschten Soll-Ausrichtung kommt. Dies kann negative Auswirkungen auf die Qualität einer zu erstellenden Schlitz- oder Dichtwand haben, für welche die Ausbildung einer Vielzahl von möglichst exakt parallelen Frässtichen auch über große Frästiefen gefordert ist.

Basierend auf dieser Erkenntnis ist nach der Erfindung eine Leitungsklemme mit mindestens einem Klemmenmittenkörper und mindestens zwei Klemmenaußenkörpern vorgesehen. Somit können die Leitungen nicht allein durch einen Kontakt am Außenumfang eines Leitungsbündels zusammengespannt werden, sondern jede Leitung im Leitungsbündel kann jeweils über den gesamten Umfang oder zumindest über einen wesentlichen Teil des Umfangs geklemmt werden.

Dies wird dadurch erreicht, dass der mindestens eine Klemmenmittenkörper und die mindestens zwei Klemmenaußenkörper jeweils zueinander passende Ausnehmungen aufweisen. Diese bilden beim Zusammensetzen der Leitungsklemme für jede Leitung einen Durchgang, wobei die einzelnen Klemmenkörper an einem Umfangsabschnitt jeder Leitung zur Anlage kommen und daran mittels einer Spanneinrichtung kraftschlüssig festgelegt werden. Es ist grundsätzlich möglich, dass die Ausnehmungen gleich mit einem maximalen Durchmesser ausgebildet sind und dann nötigenfalls durch Wechseleinsätze an verschiedene Leitungsdurchmesser anpassbar und reduzierbar sind.

Somit wird nicht nur eine zuverlässige positionsgenaue Anordnung jeder Leitung innerhalb des Leitungsbündels sichergestellt, sondern jede Leitung wird auch in dieser Position kraftschlüssig an der Leitungsklemme und damit auch relativ zu den anderen Leitungen festgelegt. Hierdurch wird auch bei einem längeren Baubetrieb ein axiales Verschieben der einzelnen Leitungen relativ zueinander vollständig oder zumindest weitgehend unterbunden.

Gemäß einem weiteren Aspekt der Erfindung werden durch die Leitungsklemme die Leitungen in dem Leitungsbündel in mindestens zwei, vorzugsweise drei oder mehr Ebenen angeordnet, so dass ein kompakter strangartiger Aufbau des Leitungsbündels erreicht wird, welcher insbesondere einen etwa kreisartigen Außenumfang haben kann.

Vorzugsweise kann die Leitungsklemme mit den einzelnen Klemmenkörpern aus einem dauerhaften, formstabilen Material gebildet sein, insbesondere einem Metallwerkstoff, etwa aus einem Stahl oder einer Aluminiumlegierung. Grundsätzlich sind auch andere Materialien denkbar, insbesondere formstabile Kunststoffmaterialien.

Es kann so mit der erfindungsgemäßen Leitungsklemme zuverlässig und dauerhaft ein kompaktes Leitungsbündel aus mehreren Leitungen erzielt werden. Die bei Bändern oder Gurten häufig erforderlichen Wartungs- und Ersatzarbeiten und der damit verbundene Zeit- und Kostenaufwand können entfallen oder zumindest in großem Maße reduziert werden.

Eine bevorzugte Ausführungsform der Erfindung besteht darin, dass die Außenumfangsseiten der mindestens zwei Klemmenaußenkörper zum Bilden eines zumindest teilweise kreisrunden oder ovalen Außenumfangs der Leitungsklemme gestaltet sind. Die Außenseiten der Klemmenaußenkörper können entsprechende bogenförmige oder bogensegmentartige Formen aufweisen, welche zum Bilden eines möglichst kreisrunden oder ovalen Außenumfangs einer zusammengesetzten Leitungsklemme beitragen. Eine derartige äußere Formgebung vermindert Reibungsverschleiß, insbesondere beim Vorbeilauf der Leitungen des Leitungsbündels mit der mindestens einen Leitungsklemme an Maschinen- oder Vorrichtungsteilen oder beim Durchlauf um eine Umlenkrolle.

Bei der Anordnung eines einzelnen Klemmenmittenkörpers mit einzelnen Ausnehmungen zu beiden Seiten können in Kombination mit den mindestens zwei Klemmenaußenkörpern mit korrespondierenden zugeordneten Ausnehmungen Leitungsbündel erzielt werden, in welchen die Leitungen in zwei zueinander versetzten Ebenen angeordnet sind. Eine bevorzugte Ausführungsform der Erfindung liegt darin, dass mindestens zwei Klemmenmittenkörper vorgesehen sind, welche zum Bilden der Leitungsklemme miteinander angeordnet sind. Damit kann zwischen den zwei Klemmenmittenkörpern eine mittlere Ebene zur Aufnahme von Leitungen gebildet werden, so dass in Kombination mit den mindestens zwei außen angeordneten Außenkörpern ein Leitungsbündel mit drei zueinander beabstandeten Ebenen zum Aufnehmen von Leitungen gebildet ist. Dabei sind die ersten Ausnehmungen der einander zugewandten Klemmenmittenkörper so ausgebildet, dass sie Durchgänge für Leitungen bilden. Durch die Anordnung von entsprechend mehr Klemmenmittenkörpern, zwischen denen dann jeweils eine Ebene zur Aufnahme von Leitungen gebildet ist, kann entsprechend ein Leitungsbündel mit mehreren Ebenen erzielt werden. Im Sinne der Erfindung ist der Begriff der Ebene nicht rein mathematisch zu verstehen, sondern eher im Sinne einer Lage, wobei in einer Ebene oder Lagen die Leitungen durchaus einen gewissen Versatz zueinander aufweisen können.

Leitungen im Sinne der Erfindung können Leitungen mit einer gewissen Flexibilität sein, insbesondere mit einem inneren Hohl- oder Aufnahmeraum. Vorzugsweise sind die Leitungen als Schlauchleitungen zum Leiten von strömungsfähigen Medien, insbesondere Flüssigkeiten, Suspensionen oder Gasen, ausgebildet. Die erfindungsgemäße Leitungsklemme ist jedoch nicht auf eine Anordnung und Festlegung allein von Schlauchleitungen im Leitungsbündel beschränkt.

Vielmehr kann eine bevorzugte Ausführungsform der Erfindung darin bestehen, dass mindestens ein Durchgang zum Aufnehmen einer Daten- und/oder einer Energieleitung angeordnet ist. Es können insbesondere Stromleitungen, Elektrokabel oder Datenleitungen sein, welche entsprechend einen metallischen Leiter oder einen Lichtleiter, etwa eine Glasfaserleitung, aufweisen können. Somit können auch diese besonders empfindlichen Leitungen geordnet und geschützt in einem Leitungsbündel zusammengefasst werden.

Die einzelnen Klemmenkörper können in jeder geeigneten Weise zum Bilden und Schließen der Leitungsklemme ausgestaltet sein. Nach einer Ausbildungsvariante der Erfindung ist es bevorzugt, dass die mindestens eine Spanneinrichtung eine Spannschraube mit Spannkopf aufweist. Grundsätzlich kann schon eine einzelne Spannschraube zum Verbinden des mindestens einen Klemmenmittenkörpers mit den mindestens zwei Klemmenaußenkörpern ausreichend sein, etwa wenn die Spannschraube in einem Mittenbereich der Leitungsklemme angeordnet wird oder an einem ersten Seitenbereich, während an dem gegenüberliegenden zweiten Seitenbereich die einzelnen Klemmenkörper scharnierartig formschlüssig miteinander verhakt oder verbunden werden können.

Vorzugsweise sind zwei oder mehr Spannschrauben an der Leitungsklemme vorgesehen, so dass diese mit herkömmlichen Schraubwerkzeugen zusammengesetzt und gelöst werden können. Zum Erzeugen der Spannkraft kann die mindestens eine Spannschraube mit einer separaten Schraubenmutter zusammenwirken oder in eine Gewindebohrung in einem der Klemmenkörper eingreifen.

Eine besonders zweckmäßige Ausgestaltung im Sinne einer Weiterbildung der Erfindung besteht darin, dass in mindestens einem Klemmenmittenkörper eine Gewindebohrung ausgebildet ist, dass passend zu der Gewindebohrung zu dem zugeordneten Klemmenaußenkörper eine Durchgangsbohrung und eine Widerlagerfläche zum Einbringen der Spannschraube in die Durchgangsbohrung und die Gewindebohrung angeordnet sind, wobei zum kraftschlüssigen Spannen der Schraubenkopf an der Widerlagerfläche anliegt. So können insbesondere durch eine grundsätzlich bekannte Schraubverbindung die einzelnen Klemmenkörper miteinander beziehungsweise gegeneinander verspannt werden, so dass eine gewünschte Spann- und Klemmkraft auf die durch die Leitungsklemme laufenden Leitungen ausgeübt werden kann. Es kann so sehr genau eine gewünschte Spann- oder Klemmkraft zum Festlegen der Leitungen in der Leitungsklemme erzielt werden. Grundsätzlich kann ein Zusammensetzen und Verspannen der Leitungsklemme auch allein zwischen den beiden außenliegenden Klemmenaußenkörpern erfolgen, so dass der mindestens eine dazwischenliegende Klemmenmittenkörper zwischen den beiden Klemmenaußenkörpern eingespannt wird. Der mindestens eine Klemmenmittenkörper weist somit zum Durchgang der Spannschraube lediglich eine Durchgangsbohrung auf, während die Spannschraube von einer Widerlagerfläche an einem Klemmenaußenkörper bis zu einer Gewindebohrung oder einer Schraubenmutter an dem anderen Klemmenaußenkörper reicht. Die Spannschraube wird durch die Durchgangsbohrung des dazwischenliegenden mindestens einen Klemmenmittenkörpers hindurchgeführt. Es ist auch möglich, dass die beiden Klemmenaußenkörper außen direkten Kontakt haben und der Klemmenmittenkörper schmaler ist als die Klemmenaußenkörper, sodass er keine Durchgangsbohrung aufweist. Die Mittenkörper können nur per Klemmkraft und/oder Formschluss gehalten werden.

Gemäß einer Weiterbildung der erfindungsgemäßen Leitungsklemme ist es bevorzugt, dass die Widerlagerfläche in einem Rücksprung an der Außenumfangsseite des Klemmenaußenkörpers ausgebildet ist. Der Rücksprung kann dabei so ausgebildet sein, dass der Schraubenkopf der Spannschraube nicht gegenüber einem Außenumfangskonturenverlauf der Leitungsklemme vorsteht, um möglichst Reibungswiderstände beim Vorbeilauf des Leitungsbündels an feststehenden Elementen oder an einer Rolle durch den Schraubenkopf zu vermeiden.

Nach einer weiteren Ausgestaltungsvariante der erfindungsgemäßen Leitungsklemme ist es bevorzugt, dass die Leitungen in drei Ebenen oder Lagen in der Leitungsklemme angeordnet sind, wobei eine erste Mittenebene und zwei Außenebenen für die Leitungen gebildet sind. Vorzugsweise können dabei in der Mittenebene mehr Leitungen aufgenommen sein als in je einer der Außenebenen. Hierdurch kann ein strangartiger, vorzugsweise runder oder ovaler Außenumfang des strangartigen Leitungsbündels unterstützt werden.

Das erfindungsgemäße Leitungsbündel ist dadurch gekennzeichnet, dass mindestens eine erfindungsgemäße Leitungsklemme angeordnet ist und die Leitungen durch die mindestens eine Leitungsklemme geführt und in den Durchgängen der Leitungsklemme darin kraftschlüssig festgelegt sind. Mit der erfindungsgemäßen mindestens einen Leitungsklemme wird ein Leitungsbündel geschaffen, bei welchem die einzelnen Leitungen in dem Bündel geordnet an jeweils einer definierten Position gehalten sind und an der Leitungsklemme kraftschlüssig eingespannt und fixiert sind. Hierdurch wird wirksam einem axialen Verschieben und Verstellen der einzelnen Leitungen in Längsrichtung zueinander entgegengewirkt oder dies sogar verhindert, was insbesondere bei herkömmlichen Schlauchbündeln beim Umlauf um Umlenkrollen aufgrund der unterschiedlich wirksamen Umlenkradien innerhalb des Schlauchbündels auftritt.

Nach einer Weiterbildung der Erfindung ist es bevorzugt, dass mehrere Leitungsklemmen entlang des Leitungsbündels mit einem definierten Abstand zueinander angeordnet sind. Der Abstand der einzelnen Leitungsklemmen entlang des Leitungsbündels in Schlauchlängsrichtung kann typischerweise einige Meter betragen. Durch die Anordnung mehrerer Leitungsklemmen kann auch bei größeren Leitungsbündellängen eine zuverlässige Ordnung und Fixierung der Leitungen innerhalb des Leitungsbündels erreicht werden.

Nach einer weiteren Ausgestaltung der Erfindung ist es vorteilhaft, dass der definierte Abstand gleich oder unterschiedlich ist. Je nach Anwendungsfall und Einsatzzweck eines Leitungsbündels kann ein geeigneter Abstand zwischen den Leitungsklemmen eingestellt werden. Fertigungstechnisch einfach ist ein über die gesamte Leitungsbündellänge gleicher Abstand der jeweils zueinander angrenzenden Leitungsklemmen entlang des Leitungsbündels. Abhängig vom Einsatzzweck kann der Abstand zwischen einzelnen Leitungsklemmen variieren. Insbesondere kann in bestimmten Längenabschnitten zwar ein gleicher Leitungsklemmenabstand gewählt sein, wobei in unterschiedlichen Leitungsbündelabschnitten jedoch unterschiedliche Abstände gewählt sind. So kann in einem Leitungsbündelabschnitt, welcher um eine Umlenkrolle läuft, ein kleinerer Abstand zwischen den Leitungsklemmen gewählt sein. In Leitungsbündelabschnitten, welche um eine Umlenkrolle laufen, können aufgrund der sich einstellenden unterschiedlichen Umlenkradien innerhalb des Leitungsbündels relativ hohe Scher- oder Verschiebkräfte im Leitungsbündel auftreten. Diese können durch eine entsprechend höhere Anzahl von Leitungsklemmen besser aufgenommen werden. Hingegen kann in Leitungsbündelabschnitten, welche nicht oder nur wenig um Umlenkrollen laufen müssen, ein größerer Abstand zwischen den Leitungsklemmen gewählt und ausreichend sein.

Bei der erfindungsgemäßen Baumaschine ist vorgesehen, dass ein erfindungsgemä-ßes Leitungsbündel angeordnet ist. Die zuvor in Zusammenhang mit dem Leitungsbündel und der erfindungsgemäßen Leitungsklemme beschriebenen Vorteile kommen so bei einer Baumaschine zum Tragen. Wartungszeiten für das Leitungsbündel und Ausfallzeiten wegen relativ zueinander verschobenen Leitungen können so bei der erfindungsgemäßen Baumaschine erheblich reduziert werden. Dies spart Zeit und Kosten und erhöht die Nutzungsdauer einer kostenintensiven Baumaschine.

Das Leitungsbündel kann dabei grundsätzlich ohne eine Umlenkrolle in der Art einer frei hängenden Schleppleitung entlang des Mastes geführt sein. Vorzugsweise sind an der Baumaschine ein oder mehrere Umlenkrollen oder andere Rollen angeordnet, über welche das Leitungsbündel zumindest abschnittsweise bogenartig umgelenkt wird.

Eine bevorzugte Ausführungsform der Erfindung besteht darin, dass mindestens eine Umlenkrolle mit einer inneren Rollennabe mit einer inneren trommelartigen Schlauchauflage angeordnet ist und dass die Rollennabe zum Bilden der Schlauchauflage Auflagestege aufweist, welche etwa gleichgerichtet zur Rollenachse und über den Umfang der Rollennabe verteilt mit einem Abstand angeordnet sind, durch welchen zwischen den Auflagestegen Ausgleichsfreiräume für Schlauchlängendifferenzen beim Rollenumlauf gebildet sind. Aufgrund der Verwendung der erfindungsgemäßen Leitungsklemmen können beim Umlauf eines Leitungsbündels um eine Umlenkrolle durch die Fixierung mittels der Leitungsklemmen die im Leitungsbündel beim Umlenken auftretenden Scher- und Verschiebekräfte in Schlauchlängsrichtung nicht mehr durch eine Verschiebung der Leitungen in Längsrichtung Leitungsklemmekompensiert oder abgebaut werden. Diese Kräfte innerhalb des Leitungsbündels entstehen dadurch, dass beim Umlenken des Leitungsbündels die radial äußeren Leitungen gestreckt werden, während radial innere Leitungen aufgrund des kleineren Umlenkradius gestaucht werden. Bei diesem Stauchen der radial inneren Leitungen können Ausbauchungen der radial inneren Leitungen im Leitungsbündel auftreten. Diese Ausbauchungen können dann durch die an der Rollennabe gebildeten Ausgleichsfreiräume aufgenommen werden. Die Ausgleichsfreiräume sind dadurch gebildet, dass keine Rollennabe mit einer durchgehenden zylindrischen Umfangswand gebildet ist, sondern die Rollennabe durch zueinander beabstandete Auflagestege mit den dazwischenliegenden Ausgleichfreiräumen gebildet ist. Die Aufnahmestege können im Querschnitt eine leichte V-Form oder einen Bogen aufweisen, um die annähernd kreisrunde Außenform des Leitungsbündels besser aufnehmen zu können.

Die Kombination eines erfindungsgemäßen Leitungsbündels mit den durch die Leitungsklemmen fixierten Leitungen und einer Umlenkrolle mit inneren Ausgleichsfreiräumen an der Rollennabe ermöglicht ein zuverlässiges und schonendes Umlenken eines erfindungsgemäßen Leitungsbündels.

Grundsätzlich kann die mindestens eine Umlenkrolle im Verlauf des Leitungsbündels an jeder geeigneten Stelle drehbar gelagert sein. Insbesondere kann die Umlenkrolle an einem festen Ort am Mast, insbesondere am Mastkopf oder an einer anderen Stelle des Mastes oder des Trägergerätes gelagert sein. Nach einer Weiterbildung der erfindungsgemäßen Baumaschine ist es vorteilhaft, dass mindestens eine Umlenkrolle vertikal verstellbar gegenüber dem Mast oder dem Ausleger gehalten ist. Die Umlenkrolle kann insbesondere an einem Tragseil höhenverstellbar zwischen einer oberen Endposition und einer unteren Endposition an einem Mast oder Ausleger verstellbar gelagert sein. Hierdurch kann an einem Mast oder einem Ausleger eine Leitung mit einer oder mehreren Schlaufen in der Art einer Schleppleitung gehalten sein, so dass eine grö-ßere Schlauchlänge auch ohne eine Leitungstrommel am Trägergerät bereitgestellt sein kann. Dies erlaubt eine besonders effiziente und kostengünstige Anordnung auch größerer Leitungsbündellängen an einer Baumaschine.

Grundsätzlich kann die Baumaschine für jeden geeigneten Einsatzzweck ausgebildet sein. Besonders bevorzugt ist es nach einer Ausgestaltung der Erfindung, dass die Baumaschine als ein Schlitzwandgerät, insbesondere mit eine Schlitzwandfräse oder einem hydraulischen Schlitzwandgreifer als Bauarbeitsgerät, ausgebildet ist. Besonders bei Schlitzwandgeräten können mehrere Leitungen benötigt werden, welche parallel zueinander von einem Trägergerät zu dem Schlitzwandgerät zugeführt sein müssen. Diese Leitungen können insbesondere hydraulische Zuführleitungen und Abführleitungen, Suspensionszuführleitungen sowie Abraumabführleitungen, Kühlleitungen oder sonstige Leitungen sein.

Die Erfindung wird nachfolgend anhand von bevorzugten Ausführungsformen weiter beschrieben, welche schematisch in den Zeichnungen dargestellt sind. In den Zeichnungen zeigen:
- Fig. 1: eine perspektivische Teilansicht eines erfindungsgemäßen Leitungsbündels mit einer erfindungsgemäßen Leitungsklemme;
- Fig. 2: eine Vorderansicht der Leitungsklemme von Fig. 1;
- Fig. 3: eine Seitenansicht der Leitungsklemme von Fig. 2;
- Fig. 4: eine Querschnittsansicht der Leitungsklemme der Figuren 2 und 3 gemäß dem Schnitt A-A;
- Fig. 5: eine Vorderansicht der Leitungsklemme gemäß den Figuren 2 bis 4 mit schematisch dargestellten Leitungen;
- Fig. 6: eine Rückansicht der Leitungsklemme von Fig. 5 mit den schematisch dargestellten Leitungen;
- Fig. 7: eine Detailquerschnittsansicht zu dem Schnitt B-B gemäß Fig. 6;
- Fig. 8: eine erste Seitenansicht einer erfindungsgemäßen Baumaschine;
- Fig. 9: eine Vorderansicht der Baumaschine von Fig. 8;
- Fig. 10: eine zweite Seitenansicht der Baumaschine der Figuren 8 und 9;
- Fig. 11: eine Detailansicht zu einer Umlenkrolle der Baumaschine von den Figuren 8 bis 10 mit einem schematisch angedeuteten Schlauchbündel mit Leitungsklemme;
- Fig. 12: eine vergrößerte Detailansicht zu Fig. 11;
- Fig. 13: eine Detailansicht zu einer erfindungsgemäßen Umlenkrolle; und
- Fig. 14: eine Querschnittsansicht zu der Umlenkrolle von Fig. 13 gemäß dem Schnitt A-A.

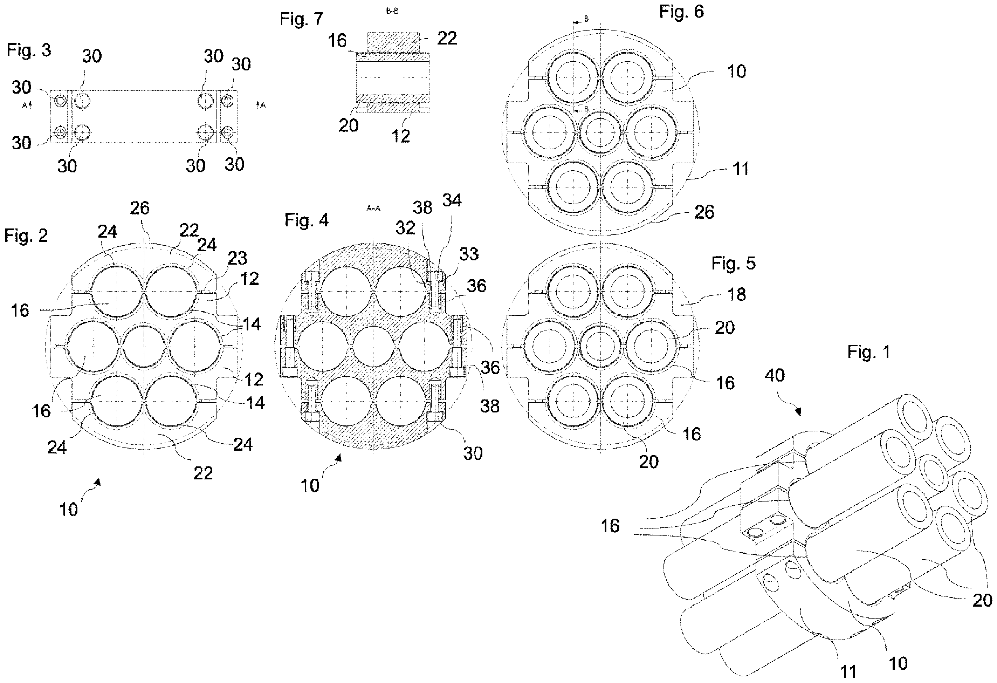

Gemäß Fig. 1 ist eine bevorzugte Ausführungsform einer erfindungsgemäßen Leitungsklemme 10 in einem erfindungsgemäßen Leitungsbündel 40 dargestellt, welches mehrere Leitungen 20, gemäß dem gezeigten Ausführungsbeispiel sieben Leitungen 20, umfasst. Die Leitungen 20 sind strangartig in dem Leitungsbündel 40 zusammengefasst, wobei das Leitungsbündel 40 und die Leitungsklemme 10 grob einen kreisförmigen Außenumfang 11 bilden.

Der Aufbau der Leitungsklemme 10 nach Fig. 1 wird näher in Zusammenhang mit den Figuren 2 bis 7 erläutert. Die Leitungsklemme 10 umfasst im gezeigten Ausführungsbeispiel zwei mittlere Klemmenmittenkörper 12 und zwei außenliegende Klemmenau-ßenkörper 22, zwischen denen in drei Ebenen oder Lagen Aufnahmen oder Durchgänge 16 für die Leitungen 20 gebildet sind, nämlich in der rein beispielhaften Ausführung drei Durchgänge 16 in der Mittenebene und je zwei Durchgänge 16 in den beiden Außenebenen. Hierzu weisen die Klemmenmittenkörper 12 erste Ausnehmungen 14 auf, welche mit hierzu korrespondierenden ersten Ausnehmungen 14 des angrenzenden Klemmenmittenkörpers 12 beziehungsweise mit zweiten Ausnehmungen 24 an den Klemmenaußenkörpern 22 die Durchgänge 16 in der Mittenebene beziehungsweise in den beiden äußeren Ebenen bilden.

Die einzelnen Klemmenkörper können mittels Spanneinrichtungen 30 miteinander verbunden und gegeneinander verspannt werden. Hierbei können die in den Durchgängen 16 liegenden Leitungen 20 kraftschlüssig an der Leitungsklemme 10 festgelegt werden.

Wie Fig. 3 zu entnehmen ist, können an den jeweils aneinander angrenzenden Klemmenkörpern mehrere, vorzugsweise vier, Spanneinrichtungen 30 angeordnet sein.

Im dargestellten Ausführungsbeispiel weist eine Spanneinrichtung 30 eine Spannschraube 32 mit einem Gewindeschaft 33 und einem durchmessergrößeren Schraubenkopf 34 auf. Die Spannschraube 32 kann durch eine Durchgangsbohrung 38 an einem Klemmenaußenkörper 22 oder einem Klemmenmittenkörper 12 bis zu einer Gewindebohrung 36 in dem jeweils gegenüberliegenden Klemmenkörper geführt sein. Durch Einschrauben der Spannschraube 32 in die jeweilig zugehörige Gewindebohrung 36 gelangt der jeweilige Schraubenkopf 34 der Spannschraube 32 zur Anlage an einer Widerlagerfläche 39 am Eintritt der jeweiligen Durchgangsbohrung 38. Hierdurch kann eine Spannbewegung zwischen den beiden angrenzenden Klemmenkörpern ausgeübt werden, wodurch die Leitungen 20 in den Durchgängen 16 kraftschlüssig festgespannt werden, wie etwa schematisch in der Schnittdarstellung von Fig. 7 angedeutet ist. Zum Einbringen der Spannschrauben 32 zum Verbinden der beiden Klemmenmittenkörper 12 können Rücksprünge 18 oder Absätze entlang des Außenumfangs 11 der Leitungsklemme 10 ausgebildet sein.

Zum Reduzieren von Reibungswiderständen kann ein Außenumfang 11 der Leitungsklemme 10 weitgehend kreisförmig oder oval gestaltet sein, wobei eine Außenumfangsseite 26 der Klemmenaußenkörper 22 vorzugsweise entsprechend bogenartig ausgebildet ist. An der gegenüberliegenden Anlageseite 23, an welcher der Klemmenaußenkörper 22 zur Anlage an den Klemmenmittenkörper 12 kommt, sind die zweiten Ausnehmungen 24 ausgebildet.

Durch mindestens eine erfindungsgemäße Leitungsklemme 10 kann ein erfindungsgemäßes Leitungsbündel 40 gebildet werden, in welchem eine Vielzahl von Leitungen 20 in einer definierten Ordnung gehalten und durch die Leitungsklemme 10 kraftschlüssig in dieser Position fixiert sind. So ergibt sich eine feste Positionierung der Leitungen 20 in radialer Richtung zueinander und auch in axialer Richtung in Bezug auf die Schlauchlängsrichtungen.

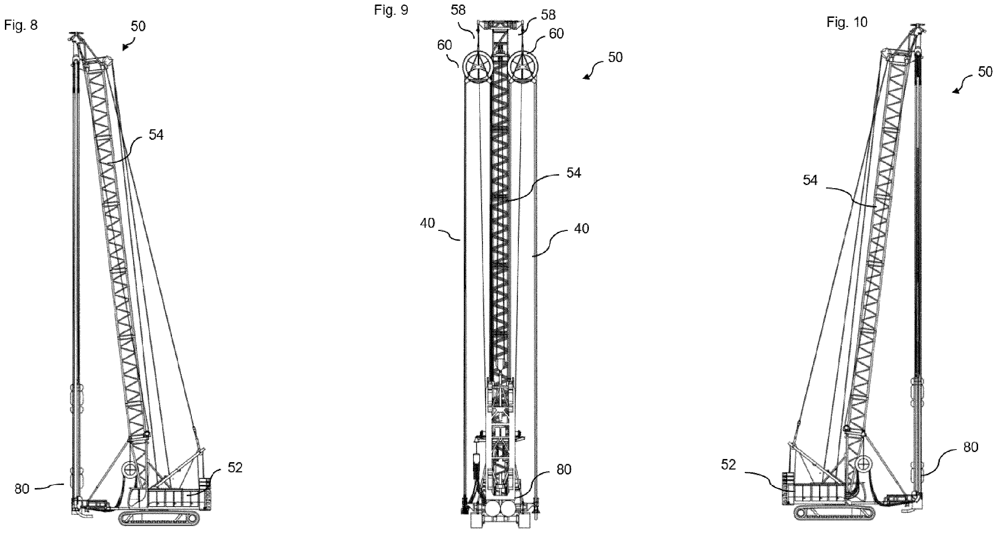

Eine erfindungsgemäße Baumaschine 50 mit einem erfindungsgemäßen Leitungsbündel 40 wird nachfolgend genauer in den Figuren 8 bis 14 erläutert.

Eine erfindungsgemäße Baumaschine 50 umfasst ein Trägergerät 52, welches gemäß dem gezeigten Ausführungsbeispiel ein Raupenfahrwerk und einen darauf drehbar gelagerten Oberwagen aufweisen kann. An dem Trägergerät 52 kann nach dem Ausführungsbeispiel ein Ausleger 54 schwenkbar um eine etwa horizontale Schwenkachse gelagert sein. An dem Ausleger 54 ist verstellbar ein Bauarbeitsgerät 80 angeordnet, insbesondere mittels mindestens eines Hauptseiles aufgehängt. In diesem Ausführungsbeispiel ist das Bauarbeitsgerät 80 als eine Schlitzwandfräse mit zwei Paaren von Fräsrädern am unteren Ende eines Fräsenrahmens ausgebildet.

Zur Ver- und Entsorgung von Fluiden, insbesondere von Hydraulikfluid, Stützsuspension und Frässuspension mit abgefrästem Bodenmaterial sowie Kühlflüssigkeiten können zwei Leitungsbündel 40 zwischen dem Trägergerät 52 und dem Bauarbeitsgerät 80 angeordnet sein. Die beiden Leitungsbündel 40 mit den nicht näher dargestellten Leitungen können jeweils über eine Umlenkrolle 60 geführt sein, welche jeweils über ein Tragseil 58 verstellbar am Kopf des Auslegers 54 aufgehängt sind. Ein Leitungsbündel 40 kann auch durch eine einzelne Schlauchleitung gebildet sein.

In dem dargestellten Betriebszustand nach den Figuren 8 bis 10 ist die Baumaschine 50 in dem Zustand gezeigt, in dem sich das Bauarbeitsgerät 80 noch vor einem Niederbringen in einen Boden befindet. Bei einem Absenken des Bauarbeitsgerätes 80 unter Ausbildung eines Frässchlitzes im Boden können die Leitungsbündel 40 dadurch nachgeführt werden, dass die Umlenkrollen 60 am Ausleger 54 entsprechend abgesenkt werden. Bei einer derartigen Anordnung der Leitungsbündel 40 ist eine Bearbeitungstiefe durch das Bauarbeitsgerät 80 etwa auf das Doppelte der Höhe des Auslegers 54 begrenzt.

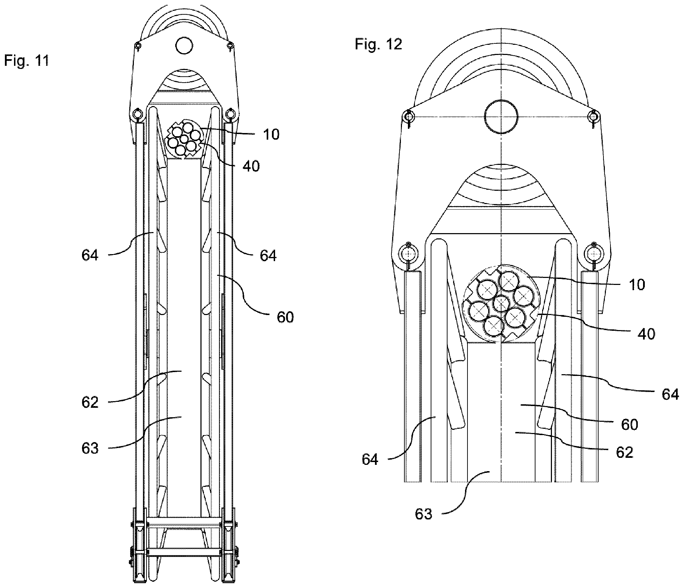

In den Figuren 11 und 12 wird eine für die zuvor beschriebene Baumaschine 50 mögliche Umlenkrolle 60 näher dargestellt. Eine derartige Umlenkrolle 60 kann einen Durchmesser von 1 Meter und mehr aufweisen, insbesondere zwischen 1 bis 3 Metern. Je größer ein Durchmesser der Umlenkrolle 60 ist, umso schonender für die Leitungen 20 kann ein daraus gebildetes Leitungsbündel 40 um die Umlenkrolle 60 geführt werden.

In diesem Ausführungsbeispiel wird ein Leitungsbündel 40 mit einer Leitungsklemme 10 mit insgesamt 7 Leitungen umgelenkt, wie es zuvor beispielhaft in Zusammenhang mit den Figuren 1 bis 7 beschrieben wurde. In den Figuren 11 und 12 ist aus Gründen der Übersichtlichkeit von dem Leitungsbündel 40 lediglich eine Querschnittsansicht zu der Leitungsklemme 10 gezeigt.

Die Umlenkrolle 60 weist eine Rollennabe 62 auf, an welcher eine trommelartige oder zylindrische Schlauchauflage 63 ausgebildet sein kann, auf welcher das Leitungsbündel 40 aufliegen kann. Zu beiden Seiten der trommelartigen Schlauchauflage 63 sind Rollenwände 64 ausgebildet, um eine sichere Führung des Leitungsbündels 40 beim Umlenken um die Umlenkrolle 60 zu gewährleisten.

Es versteht sich, dass Leitungen 20 innerhalb des Leitungsbündels 40, welche radial weiter von der trommelartigen Schlauchauflage 63 entfernt sind, beim Umlenken einem größeren Umlenkradius folgen müssen als radial näher an der Schlauchauflage 63 liegende Leitungen 20. Während die radial weiter außenliegenden Leitungen in dem Leitungsbündel 40 eher Zug- oder Streckkräften ausgesetzt sind, sind die innenliegenden Leitungen des Leitungsbündels 40 aufgrund des geringeren Umlenkradius Stauchungen ausgesetzt. Diese verschiedenen Streck- oder Stauchkräfte beim Umlenken eines Leitungsbündels 40 können dazu führen, dass sich Leitungen 20 innerhalb des Leitungsbündels 40 relativ zueinander verschieben. Dem kann durch die erfindungsgemäße Leitungsklemme 10 wirksam entgegengewirkt werden, wie zuvor beschrieben.

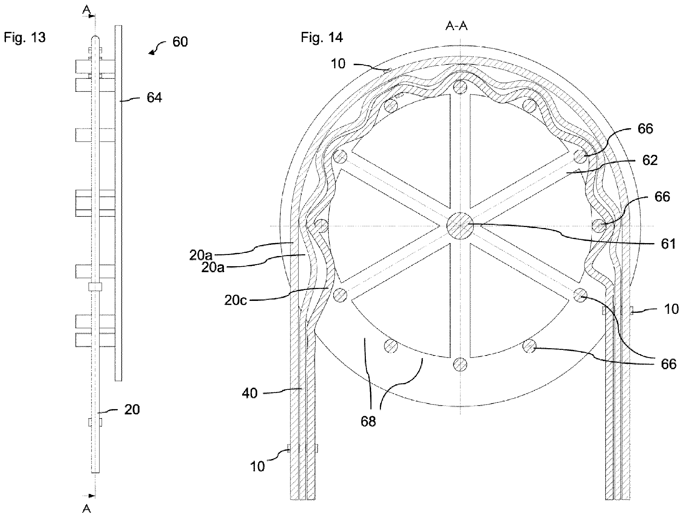

Bei der Anordnung von mehreren Leitungsklemmen 10 entlang eines Leitungsbündels 40, wie es etwa aus den Figuren 13 und 14 hervorgeht, können trotz oder wegen der kraftschlüssigen Fixierung und damit der Lagesicherung der inneren Leitungen 20 innerhalb des Leitungsbündels 40 aufgrund der wirkenden Stauchkräfte Ausbauchungen oder Auswölbungen dieser inneren Leitungen 20 entstehen. Dies kann eine sichere Führung eines solchen Leitungsbündels 40 um eine Umlenkrolle 60 beeinträchtigen.

Um diesem Problem entgegenzuwirken, kann gemäß der Ausführung nach den Figuren 13 und 14 eine Umlenkrolle 60 mit einer Rollennabe 62 ausgebildet sein, bei welcher die Schlauchauflage 63 durch eine Vielzahl von Auflagestegen 66 gebildet ist. Die Auflagestege 66 sind dabei vorzugsweise mit einem gleichen Winkelabstand zueinander angeordnet, wobei zwischen den benachbarten Auflagestegen 66 Ausgleichsfreiräume 68 gebildet sind.

Beim Umlenken eines Leitungsbündels 40, welches eine radial äußere Leitung 20a, eine mittlere Leitung 20b und eine radial innere Leitung 20c aufweisen kann, können die sich durch die Stauchkräfte bildenden Ausbauchungen an der radial inneren Leitung 20c und gegebenenfalls auch an der mittleren Leitung 20b radial nach innen in die Ausgleichsfreiräume 68 zwischen den Ausgleichsstegen 66 erstrecken. Bei einer solchen Umlenkrolle 60 kann demnach bei einem Umlenken des Leitungsbündels 40 mit mehreren Leitungen 20 um eine Rollenachse 61 das Leitungsbündel 40 zuverlässig geführt durch die Umlenkrolle 60 umgelenkt werden. Selbstverständlich können an einer solchen Umlenkrolle 60 auch, wie zuvor beschrieben, seitliche Rollenwände für eine sichere seitlichen Führung des Leitungsbündels 40 angeordnet sein.

## Patentansprüche

1. Leitungsklemme zum Bilden eines Leitungsbündels (40), insbesondere für eine Baumaschine (50), welches mehrere Leitungen (20), insbesondere ein oder mehrere Schlauchleitungen, umfasst, welche in dem Leitungsbündel (40) in mindestens zwei Ebenen angeordnet sind, wobei die Leitungsklemme (10) aufweist:
- mindestens einen Klemmenmittenkörper (12), welcher auf einer ersten Seite und einer zweiten Seite erste Ausnehmungen (14) aufweist, welche jeweils angepasst an einen Teilumfangsabschnitt, insbesondere einem etwa halben Umfangsabschnitt, einer aufzunehmenden Leitung (20) ausgebildet sind,
- mindestens zwei Klemmenaußenkörper (22), welche jeweils eine nach au-ßen gerichtete Außenumfangsseite (26) und eine nach innen gerichtete Anlageseite (23) aufweisen, welche dem Klemmenmittenkörper (12) zugewandt ist, wobei an der Anlageseite (23) mindestens eine zweite Ausnehmung (24) gebildet ist, welche angepasst an einen Teilumfangsabschnitt, insbesondere einem etwa halben Umfangsabschnitt, der aufzunehmenden Leitung (20) ausgebildet und einer ersten Ausnehmung (14) in dem Klemmenmittenkörper (12) zum Bilden eines Durchganges (16) für eine Leitung (20) zugeordnet ist,
- wobei die mindestens zwei Klemmenaußenkörper (22) gegen den mindestens einen Klemmenmittenkörper (12) mittels mindestens einer Spanneinrichtung (30) spannbar und daran festlegbar sind, wobei die Leitungen (20) in den gebildeten Durchgängen (16) aufgenommen und darin kraftschlüssig festgelegt sind.

2. Leitungsklemme nach Anspruch 1,
**dadurch gekennzeichnet,**
**dass** die Außenumfangsseiten (26) der mindestens zwei Klemmenaußenkörper (22) zum Bilden eines zumindest teilweisen kreisrunden oder ovalen Außenumfangs (11) der Leitungsklemme (10) gestaltet sind.

3. Leitungsklemme nach Anspruch 1 oder 2,
**dadurch gekennzeichnet,**
**dass** mindestens zwei Klemmenmittenkörper (12) vorgesehen sind, welche zum Bilden der Leitungsklemme (10) nebeneinander angeordnet sind.

4. Leitungsklemme nach einem der Ansprüche 1 bis 3,
**dadurch gekennzeichnet,**
**dass** mindestens ein Durchgang (16) zum Aufnehmen einer Daten- und/oder Energieleitung angeordnet ist.

5. Leitungsklemme nach einem der Ansprüche 1 bis 4,
**dadurch gekennzeichnet,**
**dass** die mindestens eine Spanneinrichtung (30) eine Spannschraube (32) mit Schraubenkopf (34) aufweist.

6. Leitungsklemme nach Anspruch 5,
**dadurch gekennzeichnet,**
**dass** in mindestens einem Klemmenmittenkörper (12) eine Gewindebohrung (36) ausgebildet ist,
**dass** passend zu der Gewindebohrung (36) an dem zugeordneten Klemmenau-βenkörper (22) eine Durchgangsbohrung (38) und eine Widerlagerfläche (39) zum Einbringen der Spannschraube (32) in die Durchgangsbohrung (38) und die Gewindebohrung (36) angeordnet sind, wobei zum kraftschlüssigen Spannen der Schraubenkopf (34) an der Widerlagerfläche (39) anliegt.

7. Leitungsklemme nach Anspruch 6,
**dadurch gekennzeichnet,**
**dass** die Widerlagerfläche (39) in einem Rücksprung an der Außenumfangsseite des Klemmenaußenkörpers (22) oder des Klemmenmittenkörpers (12) ausgebildet ist.

8. Leitungsklemme nach einem der Ansprüche 1 bis 7,
**dadurch gekennzeichnet,**
**dass** die Leitungen (20) in drei Ebenen in der Leitungsklemme (10) angeordnet sind, wobei eine erste Mittenebene und zwei Außenebenen für die Leitungen (20) gebildet sind.

9. Leitungsbündel, insbesondere für eine Baumaschine (50), welches mehrere Leitungen (20), insbesondere ein oder mehrere Schlauchleitungen, umfasst, welche in dem Leitungsbündel (40) in mindestens zwei Ebenen angeordnet sind,
**dadurch gekennzeichnet,**
**dass** mindestens eine Leitungsklemme (10) nach einem der Ansprüche 1 bis 8 angeordnet ist und
**dass** die Leitungen (20) durch die mindestens eine Leitungsklemme (10) geführt und in den Durchgängen (16) der Leitungsklemme (10) darin kraftschlüssig festgelegt sind.

10. Leitungsbündel nach Anspruch 9,
**dadurch gekennzeichnet,**
**dass** mehrere Leitungsklemmen (10) entlang des Leitungsbündels (40) mit einem definierten Abstand zueinander angeordnet sind.

11. Leitungsbündel nach Anspruch 10,
**dadurch gekennzeichnet,**
**dass** der definierte Abstand gleich oder unterschiedlich ist.

12. Baumaschine mit
- einem Trägergerät (52),
- einem daran angeordneten Mast oder Ausleger (54),
- einem am Mast beziehungsweise dem Ausleger (54) verstellbar gehaltenen Bauarbeitsgerät (80) und
- mindestens einem Leitungsbündel (40), welches entlang des Mastes oder Auslegers (54) zu dem Bauarbeitsgerät (80), insbesondere über mindestens eine Umlenkrolle (60), geführt ist,
**dadurch gekennzeichnet,**
- **dass** das Leitungsbündel (40) nach einem der Ansprüche 10 bis 12 ausgebildet ist.

13. Baumaschine nach Anspruch 12,
**dadurch gekennzeichnet,**
- **dass** mindestens eine Umlenkrolle (60) mit einer inneren Rollennabe (62) mit einer inneren trommelartigen Schlauchauflage (63) angeordnet ist und
- **dass** die Rollennabe (62) zum Bilden der Schlauchauflage (63) Auflagestege (66) aufweist, welche etwa gleichgerichtet zur Rollenachse (61) und über den Umfang der Rollennabe (62) verteilt mit einem Abstand angeordnet sind, durch welchen zwischen den Ausgleichsstegen (66) Ausgleichsfreiräume (68) für Schlauchlängendifferenzen beim Rollenumlauf gebildet sind.

14. Baumaschine nach Anspruch 12 oder 13,
**dadurch gekennzeichnet,**
**dass** mindestens eine Umlenkrolle (60) vertikal verstellbar an dem Mast oder dem Ausleger (54) gehalten ist.

15. Baumaschine nach einem der Ansprüche 12 bis 14,
**dadurch gekennzeichnet,**
**dass** diese als ein Schlitzwandgerät, insbesondere mit einer Schlitzwandfräse oder einem hydraulischen Schlitzwandgreifer als Bauarbeitsgerät (80), ausgebildet ist.

## Geänderte Patentansprüche

### Geänderte Patentansprüche gemäss Regel 137(2) EPÜ.

1. Leitungsklemme zum Bilden eines Leitungsbündels (40), insbesondere für eine Baumaschine (50), welches mehrere Leitungen (20), insbesondere ein oder mehrere Schlauchleitungen, umfasst, welche in dem Leitungsbündel (40) in mindestens zwei Ebenen angeordnet sind, wobei die Leitungsklemme (10) aufweist:
- mindestens einen Klemmenmittenkörper (12), welcher auf einer ersten Seite und einer zweiten Seite erste Ausnehmungen (14) aufweist, welche jeweils angepasst an einen Teilumfangsabschnitt, insbesondere einem etwa halben Umfangsabschnitt, einer aufzunehmenden Leitung (20) ausgebildet sind,
- mindestens zwei Klemmenaußenkörper (22), welche jeweils eine nach außen gerichtete Außenumfangsseite (26) und eine nach innen gerichtete Anlageseite (23) aufweisen, welche dem Klemmenmittenkörper (12) zugewandt ist, wobei an der Anlageseite (23) mindestens eine zweite Ausnehmung (24) gebildet ist, welche angepasst an einen Teilumfangsabschnitt, insbesondere einem etwa halben Umfangsabschnitt, der aufzunehmenden Leitung (20) ausgebildet und einer ersten Ausnehmung (14) in dem Klemmenmittenkörper (12) zum Bilden eines Durchganges (16) für eine Leitung (20) zugeordnet ist,
- wobei die mindestens zwei Klemmenaußenkörper (22) gegen den mindestens einen Klemmenmittenkörper (12) mittels mindestens einer Spanneinrichtung (30) spannbar und daran festlegbar sind, wobei die Leitungen (20) in den gebildeten Durchgängen (16) aufgenommen und darin kraftschlüssig festgelegt sind, und
- wobei die Außenumfangsseiten (26) der mindestens zwei Klemmenaußenkörper (22) zum Bilden eines zumindest teilweisen kreisrunden oder ovalen Außenumfangs (11) der Leitungsklemme (10) gestaltet sind,
**dadurch gekennzeichnet,**
**dass** mindestens zwei Klemmenmittenkörper (12) vorgesehen sind, welche zum Bilden der Leitungsklemme (10) nebeneinander angeordnet sind.

2. Leitungsklemme nach Anspruch 1,
**dadurch gekennzeichnet,**
**dass** mindestens ein Durchgang (16) zum Aufnehmen einer Daten- und/oder Energieleitung angeordnet ist.

3. Leitungsklemme nach einem der Ansprüche 1 bis 2,
**dadurch gekennzeichnet,**
**dass** die mindestens eine Spanneinrichtung (30) eine Spannschraube (32) mit Schraubenkopf (34) aufweist.

4. Leitungsklemme nach Anspruch 3,
**dadurch gekennzeichnet,**
**dass** in mindestens einem Klemmenmittenkörper (12) eine Gewindebohrung (36) ausgebildet ist,
**dass** passend zu der Gewindebohrung (36) an dem zugeordneten Klemmenaußenkörper (22) eine Durchgangsbohrung (38) und eine Widerlagerfläche (39) zum Einbringen der Spannschraube (32) in die Durchgangsbohrung (38) und die Gewindebohrung (36) angeordnet sind, wobei zum kraftschlüssigen Spannen der Schraubenkopf (34) an der Widerlagerfläche (39) anliegt.

5. Leitungsklemme nach Anspruch 4,
**dadurch gekennzeichnet,**
**dass** die Widerlagerfläche (39) in einem Rücksprung an der Außenumfangsseite des Klemmenaußenkörpers (22) oder des Klemmenmittenkörpers (12) ausgebildet ist.

6. Leitungsklemme nach einem der Ansprüche 1 bis 5,
**dadurch gekennzeichnet,**
**dass** die Leitungen (20) in drei Ebenen in der Leitungsklemme (10) angeordnet sind, wobei eine erste Mittenebene und zwei Außenebenen für die Leitungen (20) gebildet sind.

7. Leitungsbündel, insbesondere für eine Baumaschine (50), welches mehrere Leitungen (20), insbesondere ein oder mehrere Schlauchleitungen, umfasst, welche in dem Leitungsbündel (40) in mindestens zwei Ebenen angeordnet sind, **dadurch gekennzeichnet,**
**dass** mindestens eine Leitungsklemme (10) nach einem der Ansprüche 1 bis 6 angeordnet ist und
**dass** die Leitungen (20) durch die mindestens eine Leitungsklemme (10) geführt und in den Durchgängen (16) der Leitungsklemme (10) darin kraftschlüssig festgelegt sind.

8. Leitungsbündel nach Anspruch 7,
**dadurch gekennzeichnet,**
**dass** mehrere Leitungsklemmen (10) entlang des Leitungsbündels (40) mit einem definierten Abstand zueinander angeordnet sind.

9. Leitungsbündel nach Anspruch 8,
**dadurch gekennzeichnet,**
**dass** der definierte Abstand gleich oder unterschiedlich ist.

10. Baumaschine mit
- einem Trägergerät (52),
- einem daran angeordneten Mast oder Ausleger (54),
- einem am Mast beziehungsweise dem Ausleger (54) verstellbar gehaltenen Bauarbeitsgerät (80) und
- mindestens einem Leitungsbündel (40), welches entlang des Mastes oder Auslegers (54) zu dem Bauarbeitsgerät (80), insbesondere über mindestens eine Umlenkrolle (60), geführt ist,
**dadurch gekennzeichnet,**
- **dass** das Leitungsbündel (40) nach einem der Ansprüche 7 bis 9 ausgebildet ist.

11. Baumaschine nach Anspruch 10,
**dadurch gekennzeichnet,**
- **dass** mindestens eine Umlenkrolle (60) mit einer inneren Rollennabe (62) mit einer inneren trommelartigen Schlauchauflage (63) angeordnet ist und
- **dass** die Rollennabe (62) zum Bilden der Schlauchauflage (63) Auflagestege (66) aufweist, welche etwa gleichgerichtet zur Rollenachse (61) und über den Umfang der Rollennabe (62) verteilt mit einem Abstand angeordnet sind, durch welchen zwischen den Ausgleichsstegen (66) Ausgleichsfreiräume (68) für Schlauchlängendifferenzen beim Rollenumlauf gebildet sind.

12. Baumaschine nach Anspruch 10 oder 11,
**dadurch gekennzeichnet,**
**dass** mindestens eine Umlenkrolle (60) vertikal verstellbar an dem Mast oder dem Ausleger (54) gehalten ist.

13. Baumaschine nach einem der Ansprüche 10 bis 12,
**dadurch gekennzeichnet,**
**dass** diese als ein Schlitzwandgerät, insbesondere mit einer Schlitzwandfräse oder einem hydraulischen Schlitzwandgreifer als Bauarbeitsgerät (80), ausgebildet ist.
